# EUROPÄISCHE PATENTANMELDUNG

(11) **EP 3 225 335 A1**
(43) Veröffentlichungstag der Anmeldung: **04.10.2017**
(21) Anmeldenummer: 16163545.3
(22) Anmeldetag: 01.04.2016
(51) Int. Cl.: B23B 1/00, B23B 5/28, B60B 3/10

(54) **VERFAHREN ZUR VEREDELUNG DER OBERFLÄCHE EINES RADTEILS UND VEREDELTES RADTEIL**

(71) Anmelder: Borbet Austria GmbH, 5282 Ranshofen (AT)
(72) Erfinder: EBETSHUBER, Manfred, 4942 Gurten (AT); ESTERBAUER, Thomas, 5261 Uttendorf (AT)
(74) Vertreter: Sonn & Partner Patentanwälte

(57) **Zusammenfassung**

Verfahren zur Veredelung der Oberfläche eines Radteils (3) mittels Drehen und entsprechend veredeltes Radteil (3), wobei eine Relativbewegung zwischen dem Drehwerkzeug (5) und dem Radteil (3) in eine Vorschubrichtung ausgeführt wird, wobei die Vorschubrichtung zusätzlich zu einer radialen Komponente in einem ersten Abschnitt der Vorschubbewegung eine erste axiale Komponente parallel zu der Rotationsachse (4) und in einem zweiten Abschnitt der Vorschubbewegung eine von der ersten axialen Komponente verschiedene zweite axiale Komponente parallel zu der Rotationsachse (4) aufweist, sodass die Oberfläche des veredelten Radteils (3) zumindest einen ersten radialen Abschnitt (10) und einen zweiten radialen Abschnitt (11) aufweist, wobei die beiden radialen Abschnitte (10, 11) in radiale Richtung einen Winkel (17) kleiner als 180° einschließen.

## Beschreibung

Die Erfindung betrifft ein Verfahren zur Veredelung der Oberfläche eines Radteils mittels Drehen sowie ein entsprechend veredeltes Radteil. Ein solches Radteil ist insbesondere ein Rad ohne Reifen, eine Autofelge oder eine Radkappe.

Bei einem Drehverfahren der eingangs angeführten Art wird das Radteil in einer Drehmaschine um eine Rotationsachse gedreht und die Oberfläche des Radteils mit einem Drehwerkzeug spanend bearbeitet, wobei gleichzeitig mit der Drehung eine Relativbewegung zwischen dem Drehwerkzeug und dem Radteil in eine Vorschubrichtung ausgeführt wird und wobei die Vorschubrichtung des Drehwerkzeugs zumindest eine von Null verschiedene radiale Komponente quer zu der Rotationsachse aufweist. Derartige Verfahren sind auch als Glanzdreh-Verfahren bekannt. Es handelt sich dabei im Wesentlichen um eine spezielle Variante des Querplandrehens, wobei anwendungsbedingt nur eine geringe SchnittTiefe und Spanabnahme, insbesondere beim Schlichten (Fertigdrehen), von unter 1 mm in Frage kommt. Zudem wird abhängig vom Spitzenradius des Drehwerkzeugs ein relativ geringer Vorschub von weniger als 2 mm pro Minute verwendet, um eine gleichbleibend hohe Oberflächengüte und damit die gewünschte Veredelung zu erzielen, welche das resultierende veredelte Radteil auszeichnet.

Ein solches Verfahren und eine damit bearbeitete Radkappe ist beispielsweise aus der DE 3835004 A1 bekannt. Die Radkappe umfasst einen Teller mit einer reliefartig geprägten Sichtfläche. Im Rahmen einer Endbearbeitung wird die Sichtfläche mittels Glanzdrehen veredelt. Die Stufen der reliefartigen Struktur des Tellers werden dabei nicht verändert bzw. müssen zu diesem Zeitpunkt bereits in einem separaten Herstellungsschritt vorgefertigt worden sein.

Die DE 3021241 A1 zeigt ebenfalls eine mit einem Reliefmuster versehen Radzierkappe, wobei die Facetten aufgrund ihres teilweise geraden und parallelen Verlaufs offenbar nicht mittels eines Drehverfahrens hergestellt sind. Dementsprechend befasst sich die DE 3021241 A1 auch nicht mit der Möglichkeit einer Oberflächenveredelung im Rahmen eines Drehverfahrens.

Es ist Aufgabe der Erfindung, ein Verfahren vorzuschlagen, mit dem die Oberflächengüte und die Oberflächengestaltung eines Radteils einfacher und rascher als mit den bekannten Verfahren veredelt werden kann.

Diese Aufgabe wird bei einem Verfahren der eingangs angeführten Art dadurch gelöst, dass die Vorschubrichtung zusätzlich zu der radialen Komponente in einem ersten Abschnitt der Vorschubbewegung (d.h. in einem von einem äußeren und einem inneren Radius des Radteils begrenzten, radialen Abschnitt der zu bearbeitenden Oberfläche) eine erste axiale Komponente parallel zu der Rotationsachse und in einem zweiten Abschnitt (d.h. in einem mit dem ersten Abschnitt konzentrischen zweiten radialen Abschnitt der zu bearbeitenden Oberfläche) der Vorschubbewegung eine von der ersten axialen Komponente verschiedene zweite axiale Komponente parallel zu der Rotationsachse aufweist.

Der zweite Abschnitt ist dabei naturgemäß von dem ersten Abschnitt verschieden und die Abschnitte überlappen sich nicht. Die radiale Komponente der Vorschubrichtung ist vorzugsweise überall (d.h. während der gesamten Vorschubbewegung) im Wesentlichen gleich, kann aber auch abhängig vom Radius variieren. Die axiale Komponente der Vorschubrichtung kann in zumindest einem Abschnitt auch Null sein. Die axiale Komponente der Vorschubrichtung bewirkt eine mit der Vorschubbewegung gekuppelte Zustellbewegung, falls von einer ursprünglich planen Oberfläche des Werkstücks normal auf die Rotationsachse ausgegangen wird. Die Zustellung des Drehwerkzeugs parallel zur Rotationsachse wird zumindest in einem Bereich der Vorschubbewegung mit dem Vorschub geändert, d.h. abhängig vom Abstand des Drehwerkzeugs von der Rotationsachse (dessen radialer Position). Diese Änderung der Zustellung kann durch eine der radialen Bewegung überlagerte axiale Bewegung des Drehwerkzeugs und/oder eine der Drehbewegung überlagerte axiale Bewegung des Werkstücks ausgeführt werden. Das vorgeschlagene Drehverfahren weicht somit von einem exakten Querplandrehen ab, weil der Vorschub nicht ausschließlich quer, d.h. in radiale Richtung, bewirkt wird, sondern zumindest abschnittsweise auch in axiale Richtung, d.h. parallel zur Rotationsachse des Werkstücks.

Außerdem ist es Aufgabe der Erfindung, ein Radteil vorzuschlagen, welches bei zumindest vergleichbarer Oberflächengüte und Oberflächengestaltung einfacher und rascher herstellbar ist als bekannte Radteile.

Diese Aufgabe wird bei einem Radteil der eingangs angeführten Art dadurch gelöst, dass die Oberfläche zumindest einen ersten radialen Abschnitt und einen zweiten radialen Abschnitt aufweist, wobei die beiden radialen Abschnitte in radiale Richtung einen Winkel kleiner als 180° einschließen. Das entspricht einem Schnittwinkel der beiden radialen Abschnitte in radiale Richtung größer als 0°. D.h. der erste radiale Abschnitt und der zweite radiale Abschnitt liegen nicht in einer gemeinsamen Ebene. Als radiale Abschnitte werden in diesem Zusammenhang durch einen äußeren und einen inneren Radius des Radteils begrenzte Abschnitte der Oberfläche des Radteils bezeichnet. Diese Abschnitte müssen nicht notwendigerweise ringförmig sein, sondern weisen im Allgemeinen in Umfangsrichtung, d.h. azimutal, Unterbrechungen auf (z.B. zwischen Speichen des Rades).

Vorzugsweise ist der Betrag der axialen Komponenten bei dem vorgeschlagenen Verfahren jeweils kleiner oder gleich einem Zehntel, insbesondere kleiner oder gleich einem Zwanzigstel, des Betrags der radialen Komponente. In entsprechender Weise schließen die beiden radialen Abschnitte des Radteiles in radiale Richtung vorzugsweise einen Winkel kleiner als 180° und größer als 168°, insbesondere größer als 174°, ein. Das entspricht einem Schnittwinkel der beiden radialen Abschnitte in radiale Richtung zwischen 0° und 12°, insbesondere zwischen 0° und 6°. Dadurch wird eine vergleichsweise flache Struktur der veredelten Oberfläche erzielt, was eine Ablagerung von Verschmutzungen erschwert und die Reinigung der Oberfläche erleichtert.

Weiters ist es günstig, wenn im Rahmen des vorliegenden Verfahrens der Einstellwinkel und/oder der Neigungswinkel des Drehwerkzeugs gleichzeitig mit der Vorschubbewegung an die jeweils verwendete Vorschubrichtung angepasst wird. Mit einer geeigneten Anpassung kann eine konstante Oberflächengüte trotz der unterschiedlichen effektiven Orientierungen der erzeugten Oberfläche gegenüber dem Drehwerkzeug erzielt werden.

Es ist vorteilhaft, wenn die radiale Komponente und zumindest eine der axialen Komponenten der Vorschubrichtung zumindest abschnittsweise konstant ist. Dadurch kann eine glänzende, ebene Oberfläche erzielt werden. Bevorzugt sind die genannten Komponenten im Wesentlichen überall, d.h. während der gesamten Vorschubbewegung mit Ausnahme von Übergängen und Kanten zwischen den Abschnitten, konstant.

Bei einem entsprechend vorteilhaften Radteil liegt zumindest einer der radialen Abschnitte im Wesentlichen auf einer gedachten Mantelfläche eines Kegelstumpfes. Von einer tatsächlichen Mantelfläche unterscheidet er sich im Allgemeinen durch Unterbrechungen in Umfangsrichtung.

Eine ansprechende Oberflächenstruktur kann außerdem dadurch erzielt werden, dass im Rahmen des vorliegenden Verfahrens mehrere Abschnitte mit jeweils konstanter Vorschubrichtung vorgesehen sind, wobei eine Breite der Abschnitte in radiale Richtung im Wesentlichen gleich ist, z.B. zwischen 5 mm und 20 mm. Durch diese Art der Bearbeitung kann der Eindruck von regelmäßigen konzentrischen Ringen erzeugt werden.

In diesem Zusammenhang ist es besonders günstig, die Vorschubrichtungen in zumindest zwei nicht unmittelbar benachbarten Abschnitten im Wesentlichen parallel sind. Es entsteht dabei eine dachartige Struktur der bearbeiteten Oberfläche, welche aufgrund der abwechselnd gleichen Reflexionswinkel einen zweifarbigen Eindruck des Radteils erweckt.

Die Oberfläche des Radteils kann dementsprechend mehrere radiale Abschnitte aufweisen, die im Wesentlichen jeweils auf einer gedachten Mantelfläche eines Kegelstumpfes liegen und deren Breite in radiale Richtung im Wesentlichen gleich ist, z.B. zwischen 5 mm und 20 mm, wobei die Abschnitte vorzugsweise abwechselnd auf einer gedachten Mantelfläche eines Kegelstumpfes mit einem ersten oder einem zweiten Öffnungswinkel liegen. Das Radteil besitzt somit eine glanzgedrehte Oberfläche mit einer einem Facettenschliff vergleichbaren Struktur, wobei die Facetten ringförmig und konzentrisch angeordnet sind. Eine andere Anordnung oder Orientierung der Facetten ist herstellungsbedingt nicht oder nur mit ungleich komplizierteren Maschinen möglich.

Um scharfe Kanten in der Oberflächenstruktur zu vermeiden, können zwischen den Abschnitten durch kontinuierliche Variation der Vorschubrichtung abgerundete Übergänge hergestellt werden, wobei der Radius der Abrundung größer als 0,1mm, insbesondere größer als 0,3 mm ist. In entsprechender Weise kann die Oberfläche des vorliegenden Radteils vorzugsweise zwischen den Abschnitten abgerundete Übergänge aufweisen, wobei der Radius der Abrundung größer als 0,1 mm, insbesondere größer als 0,3 mm, ist. Durch die Abrundungen wird die Anfälligkeit der Oberfläche für Beschädigungen, z.B. gebrochene Kanten, deutlich gemindert.

Weiters ist es im Zusammenhang mit dem obigen Verfahren besonders günstig, wenn die Oberfläche des Radteils nach dem Drehen, vorzugsweise mit Lack, insbesondere mit Acryllack, beschichtet wird. Durch die so erzeugte Beschichtung kann die Oberflächengüte des Radteils geschützt werden. Besonders vorteilhaft ist die Verwendung eines eingefärbten Acryllacks, welcher den Effekt der unterschiedlichen Reflexionseigenschaften aufgrund der Oberflächenstruktur besonders hervorhebt.

Vor der Beschichtung kann die Oberfläche zusätzlich mit Polyester Klarpulver oder mit Akrylklarpulver beschichtet werden. Diese Pulver werden zum Schutz vor Umwelteinflüssen wie Streusalz, Steinschlag sowie Kantenkorrosion verwendet.

Entsprechende Vorteile können erzielt werden, wenn die Oberfläche des Radteils eine Schutzschicht, vorzugsweise aus Lack, insbesondere aus Acryllack, aufweist, wobei die Schutzschicht vorzugsweise ein Polyester Klarpulver oder ein Akrylpulver umfasst.

Die Vorteile der Erfindung kommen besonders vorteilhaft zur Geltung, wenn das Radteil aus Leichtmetall, insbesondere aus Aluminium, hergestellt ist; d.h. wenn es sich um eine Leichtmetallrad oder ein Aluminiumrad handelt. Dieses kann vor der Oberflächenbearbeitung gegossen, geschmiedet oder aus dem vollen gefräst werden.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Die Zeichnungen zeigen im Einzelnen:
Fig. 1 schematisch eine Drehmaschine zur Durchführung des erfindungsgemäßen Verfahrens;
Fig. 2 eine vergrößerte Ansicht des in die Drehmaschine eingespannten Werkstücks und des Drehwerkzeugs der Drehmaschine gemäß Fig. 1;
Fig. 3 eine Schnittansicht entlang der Linie III-III in Fig. 2 durch einen Teil des Werkstücks; und
Fig. 4 eine Detailansicht des bearbeiteten Werkstücks gemäß dem Ausschnitt IV in Fig. 3.

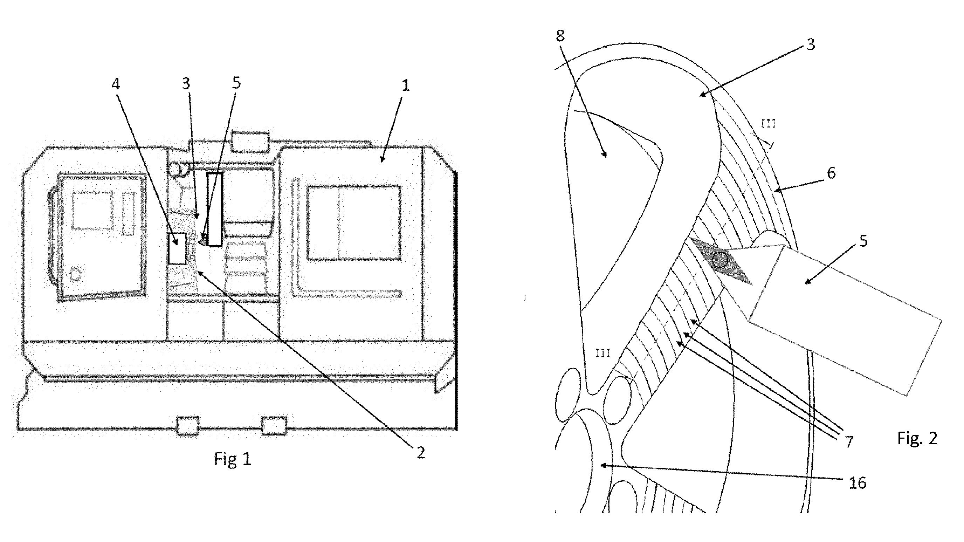

Fig. 1 zeigt eine Drehmaschine 1 in der ein Werkstück 2 in Form eines Radteils 3 um eine Rotationsachse 4 gedreht wird. Das Radteil 3 ist dabei eine Autofelge, d.h. ein Autorad ohne Reifen. Die Oberfläche des Radteils 3 wird durch die Drehung mit dem Drehwerkzeug 5 spanend bearbeitet. Dabei wird das Drehwerkzeug 5 im Wesentlichen quer zur Rotationsachse 4 in radialer Richtung über die Oberfläche des Radteils 3 geführt. Diese Bewegung wird als Vorschubbewegung und deren Richtung als Vorschubrichtung bezeichnet. Beim gewöhnlichen Glanzdrehen wird durch eine ausschließlich radiale Bewegung des Drehwerkzeugs 5 relativ zum Werkstück 2 eine vollständig plane Oberfläche des Autorads 3 in einer Ebene quer zur Rotationsachse 4 erzeugt bzw. veredelt. Erfindungsgemäß wird das Drehwerkzeug 5 zusätzlich zu der radialen Vorschubbewegung in geringerem Ausmaß auch parallel zur Rotationsachse 4, d.h. in axiale Richtung, bewegt. Diese zusätzliche Bewegung ist so mit der radialen Bewegung abgestimmt, dass sich eine kontinuierliche Vorschubbewegung sowohl mit einer von null verschiedenen radialen Komponente als auch mit einer zumindest abschnittsweise von null verschiedenen axialen Komponente parallel zur Rotationsachse 4 ergibt.

Die Drehmaschine 1 kann beispielsweise ein Ein-Schlitten-System aufweisen, das zusätzlich zur Drehung um die Rotationsachse 4 eine Translation parallel und/oder quer zur Rotationsachse 4 erlaubt. Dementsprechend kann die axiale Komponente der Vorschubrichtung in der Drehmaschine durch eine axiale Bewegung des Werkstücks 2 gegenüber dem Drehwerkzeug 5 erreicht werden. Die Drehung des Werkstücks 2 kann durch eine Hauptspindel mit Direktantrieb gewährleistet werden, wobei das Werkstück 2 mittels eines drei-Backenspannsystems mit Fliehkraftausgleich auf der Hauptspindel eingespannt ist.

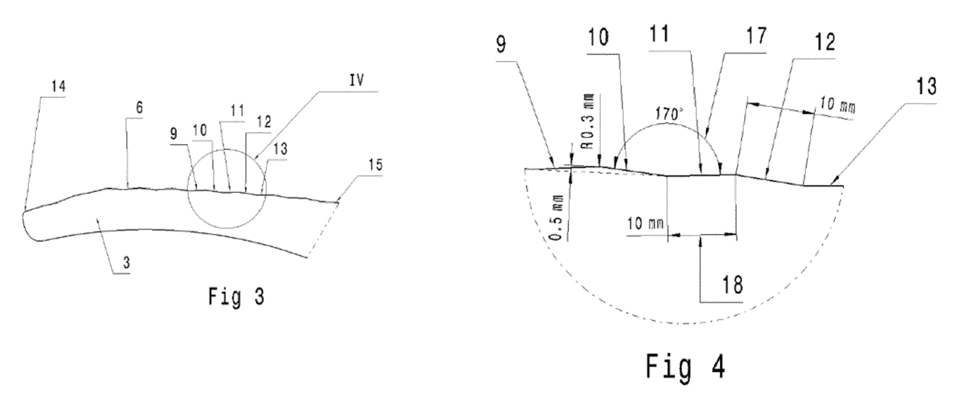

Eine durch geringfügige Variation der Vorschubrichtung, d.h. deren axialer Komponente, erzielbare Oberflächenstruktur 6 des Radteils 3 ist in Fig. 2 dargestellt. Die im montierten Zustand des Radteils 3 nach außen weisende Oberfläche ist dabei in eine Vielzahl von radial aufeinander folgend angeordnete Abschnitte 7 unterteilt. Die Abschnitte 7 sind dabei im Wesentlichen ringförmig und konzentrisch zur Rotationsachse des Radteils 3 angeordnet und durch Öffnungen 8 im Radteil 3 unterbrochen. Die einzelnen Abschnitte 7 unterscheiden sich durch die zu Ihrer Herstellung vom Drehwerkzeug 5 ausgeführte Vorschubbewegung, insbesondere der Vorschubrichtung. Im vorliegenden Beispiel wird die Oberfläche eines beispielsweise gegossenen Aluminiumrads mit einer dachartigen Struktur, ähnlich einem Facettenschliff, versehen. Die einzelnen Facetten sind dabei durch die Abschnitte 7 gebildet. Aufgrund der unterschiedlichen Neigungen der einzelnen Abschnitte (vgl. Fig. 3 und 4) und dem daraus resultierenden unterschiedlichen Betrachtungswinkel erzeugt die Oberflächenstruktur 6 einen mehrfarbigen Eindruck der außerdem abhängig vom Lichteinfall variiert.

Die Einzelheiten der Oberflächenstruktur 6 sind in den Schnittdarstellungen gemäß Fig. 3 und 4 genauer ersichtlich. In Fig. 4 sind zudem die Abmessungen einer besonders bevorzugten Ausführungsvariante eingezeichnet. In der dargestellten Schnittdarstellung entlang einer radialen Schnittlinie (vgl. Linie III-III in Fig. 2) ist die relative Ausrichtung der einzelnen radialen Abschnitte 9-13 ersichtlich. Diese unterschiedliche Ausrichtung der radialen Abschnitte 9-13 wird durch das vorliegende Verfahren mit der zwischen benachbarten Abschnitten 9-13 geänderten Vorschubrichtung des Drehwerkzeugs 5 während der Vorschubbewegung zwischen einem äußeren Rand 14 des Radteils und einem inneren minimalen Radius 15 (z.B. dem Radius einer Nabenbohrung 16; vgl. Fig. 2). Der radiale Verlauf bzw. der Einstellwinkel der einzelnen radialen Abschnitte 9-13 der Oberflächenstruktur 6 des Radteils 3 wird dabei durch eine jeweils entsprechende Vorschubrichtung des Drehwerkzeugs 5 bei der Bearbeitung der Oberfläche in den betreffenden Abschnitt festgelegt. D.h. der in Fig. 4 im Detail dargestellte radiale Verlauf wird direkt auf die bei dessen Herstellung verwendete Vorschubrichtung schließen.

Als Drehwerkzeug kann beispielsweise eine PKD-Wendeplatte mit Negativphase und einem Plattenradius von etwa 0,8 mm verwendet werden. In der Drehmaschine 1 kann in an sich bekannter Weise eine Werkzeugkühlung für das Drehwerkzeug 5 mit einem Luft/Öl-Gemisch vorgesehen sein. Der Einstellwinkel und Neigungswinkel des Drehwerkzeugs 5 kann dabei abhängig von der gewünschten Oberflächengestaltung gewählt sein und vorzugsweise an die einzelnen radialen Abschnitte 9-13 angepasst werden. Zusätzlich zur Werkzeugkühlung durch die Drehmaschine 1 kann eine Innenkühlung des Drehwerkzeugs 5 direkt an der Schneide vorgesehen sein. Bei derartigen Drehwerkzeugen ist ein Werkzeugwechsel zwischen dem Schruppen und Schlichten nicht erforderlich, d.h. beide Vorgänge können mit dem gleichen Drehwerkzeugs 5 durchgeführt werden.

Die einzelnen radialen Abschnitte 9-13 haben in dem gezeigten Beispiel jeweils eine Breite von etwa 10 mm. Benachbarte Abschnitte 10, 11 (bzw. 11, 12 oder 12, 13 oder 9,10) schließen in radialer Richtung einen Winkel 17 von etwa 170° (bzw. 190°) ein. Die Übergänge zwischen den einzelnen radialen Abschnitten 9-13 sind abgerundet mit einem Radius von etwa 0,3 mm in dem bei der Veredelung die axiale Komponente der Vorschubrichtung zwischen benachbarten Abschnitten 9, 10 kontinuierlich geändert wird, d.h. über mehrere Umdrehungen des Werkstücks 2 hinweg. Aus dem eingeschlossenen Winkel 17 und der Breite 18 der Abschnitte 9-13 begibt sich eine Änderung der axialen Position der Oberfläche des Radteils 3 innerhalb eines Bereichs von etwa 0,5 mm (entspricht etwa einer "Höhe").

Das vorliegende Verfahren zur Veredelung der Oberfläche des Radteils 3 mittels Drehen kann vorzugsweise in zwei Schnittdurchgänge (einmal Schruppen, einmal Schlichten) unterteilt sein, wobei beim Schruppen eine Drehzahl von etwa 2000 Umdrehungen/min und beim Schlichten eine Drehzahl von etwa 1800 Umdrehung/min verwendet werden kann. Die Drehzahl kann dabei über die gesamte Vorschubbewegung im Wesentlichen konstant sein (sodass die Schnittgeschwindigkeit je nach Radius variiert). Als Vorschub bzw. Vorschubgeschwindigkeit kann für beide Durchgänge 0,2 mm/min gleichbleibend über den gesamte Durchgang vorgesehen sein. Die Schnitttiefe kann beim Schruppen etwa 0,5 mm betragen, wobei zugleich ein bestehender Lackaufbau auf der Oberfläche abgetragen werden kann. Beim Schlichten wird vorzugsweise eine Schnitttiefe von etwa 0,1 mm verwendet. Das zu bearbeitende Radteil 3 kann vor dem Drehen auf eine Oberflächentemperatur von etwa 50°C aufgeheizt werden, was insbesondere bei der Bearbeitung von zuvor bereits lackierten Oberflächen vorteilhaft ist.

Nach dem abgeschlossenen Drehvorgang kann die Oberfläche des Radteils 3 mit einer Schutzschicht aus Acryllack versehen werden. Vor der Lackierung kann die Oberfläche zusätzlich mit einem Klarpulver oder Acrylpulver bestreut werden. Eine solche Beschichtung wirkt Alterungsprozessen, insbesondere bei metallischen Oberflächen (z.B. Aluminium), entgegen und schützt die Oberfläche vor chemischen und mechanischen Einwirkungen. Dadurch wird das mit der Veredelung erreichte Erscheinungsbild über einen längeren Zeitraum erhalten. Außerdem können etwaige Beschädigungen in der Schutzschicht mit vergleichsweise einfachen Mitteln behoben werden ohne die darunter liegende metallische Oberfläche bearbeiten zu müssen.

Die vorstehenden Ausführungsbeispiele eignen sich insbesondere für Leichtmetallautofelgen, z.B. aus Aluminium. Dabei ist es unerheblich ob die Autofelge gegossen, geschmiedet oder aus dem Vollen gefräst ist. Die Vorteile der Erfindung sind aber selbstverständlich analog auch auf andere Radteile, z.B. Radkappen oder Felgen anderer Fahrzeuge in gleicher Weise, und ohne dabei den Umfang der Erfindung zu verlassen, erzielbar.

## Patentansprüche

1. Verfahren zur Veredelung der Oberfläche eines Radteils (3) mittels Drehen, wobei das Radteil (3) in einer Drehmaschine (1) um eine Rotationsachse (4) gedreht wird und die Oberfläche des Radteils (3) mit einem Drehwerkzeug (5) spanend bearbeitet wird, wobei gleichzeitig mit der Drehung eine Relativbewegung zwischen dem Drehwerkzeug (5) und dem Radteil (3) in eine Vorschubrichtung ausgeführt wird, wobei die Vorschubrichtung zumindest eine von Null verschiedene radiale Komponente quer zu der Rotationsachse (4) aufweist, **dadurch gekennzeichnet, dass** die Vorschubrichtung zusätzlich zu der radialen Komponente in einem ersten Abschnitt der Vorschubbewegung eine erste axiale Komponente parallel zu der Rotationsachse (4) und in einem zweiten Abschnitt der Vorschubbewegung eine von der ersten axialen Komponente verschiedene zweite axiale Komponente parallel zu der Rotationsachse (4) aufweist.

2. Verfahren nach Anspruch 1, **dadurch gekennzeichnet, dass** der Betrag der axialen Komponenten der Vorschubrichtung jeweils kleiner oder gleich einem Zehntel, insbesondere kleiner oder gleich einem Zwanzigstel, des Betrags der radialen Komponente ist.

3. Verfahren nach Anspruch 1 oder 2, **dadurch gekennzeichnet, dass** der Einstellwinkel und/oder der Neigungswinkel des Drehwerkzeugs (5) gleichzeitig mit der Vorschubbewegung an die jeweils verwendete Vorschubrichtung angepasst wird.

4. Verfahren nach einem der Ansprüche 1 bis 3, **dadurch gekennzeichnet, dass** die radiale Komponente und zumindest eine der axialen Komponenten der Vorschubrichtung zumindest abschnittsweise konstant ist.

5. Verfahren nach Anspruch 4, **dadurch gekennzeichnet, dass** mehrere Abschnitte (7; 9-13) mit jeweils konstanter Vorschubrichtung vorgesehen sind, wobei eine Breite (18) der Abschnitte (7; 9-13) in radiale Richtung im Wesentlichen gleich ist, z.B. zwischen 5 mm und 20 mm, wobei die Vorschubrichtungen in zumindest zwei nicht unmittelbar benachbarten Abschnitten (9, 11) vorzugsweise im Wesentlichen parallel sind.

6. Verfahren nach einem der Ansprüche 1 bis 5, **dadurch gekennzeichnet, dass** zwischen den Abschnitten (7; 9-13) durch kontinuierliche Variation der Vorschubrichtung abgerundete Übergänge hergestellt werden, wobei der Radius der Abrundung größer als 0,1 mm, insbesondere größer als 0,3 mm ist.

7. Verfahren nach einem der Ansprüche 1 bis 6, **dadurch gekennzeichnet, dass** die Oberfläche nach dem Drehen, vorzugsweise mit Lack, insbesondere mit Acryllack, beschichtet wird.

8. Verfahren nach Anspruch 7, **dadurch gekennzeichnet, dass** die Oberfläche vor dem Beschichten mit Polyester Klarpulver oder mit Akrylklarpulver beschichtet wird.

9. Radteil (3) mit einer mittels Glanzdrehen veredelten Oberfläche, **dadurch gekennzeichnet, dass** die Oberfläche zumindest einen ersten radialen Abschnitt (10) und einen zweiten radialen Abschnitt (11) aufweist, wobei die beiden radialen Abschnitte (10, 11) in radiale Richtung einen Winkel (17) kleiner als 180° einschließen.

10. Radteil (3) nach Anspruch 9, **dadurch gekennzeichnet, dass** die beiden radialen Abschnitte (10, 11) in radiale Richtung einen Winkel (17) kleiner als 180° und größer als 168°, insbesondere größer als 174°, einschließen.

11. Radteil (3) nach Anspruch 9 oder 10, **dadurch gekennzeichnet, dass** zumindest einer der radialen Abschnitte (10, 11) im Wesentlichen auf einer gedachten Mantelfläche eines Kegelstumpfes liegt.

12. Radteil (3) nach Anspruch 11, **dadurch gekennzeichnet, dass** die Oberfläche mehrere radiale Abschnitte (7; 9-13) aufweist, die im Wesentlichen jeweils auf einer gedachten Mantelfläche eines Kegelstumpfes liegen und deren Breite (18) in radiale Richtung im Wesentlichen gleich ist, z.B. zwischen 5 mm und 20 mm, wobei die Abschnitte vorzugsweise abwechselnd auf einer gedachten Mantelfläche eines Kegelstumpfes mit einem ersten oder einem zweiten Öffnungswinkel liegen.

13. Radteil (3) nach einem der Ansprüche 9 bis 12, **dadurch gekennzeichnet, dass** die Oberfläche zwischen den Abschnitten (7; 9-13) abgerundete Übergänge aufweist, wobei der Radius der Abrundung größer als 0,1 mm, insbesondere größer als 0,3 mm ist.

14. Radteil (3) nach einem der Ansprüche 9 bis 13, **dadurch gekennzeichnet, dass** die Oberfläche eine Schutzschicht, vorzugsweise aus Lack, insbesondere aus Acryllack, aufweist, wobei die Schutzschicht vorzugsweise ein Polyester Klarpulver oder ein Akrylklarpulver umfasst.

15. Verfahren oder Radteil (3) nach einem der Ansprüche 1 bis 14, **dadurch gekennzeichnet, dass** das Radteil ein Leichtmetallrad, insbesondere ein Aluminiumrad, ist.
